# EUROPÄISCHE PATENTANMELDUNG

(11) **EP 1 959 586 A1**
(43) Veröffentlichungstag der Anmeldung: **20.08.2008**
(21) Anmeldenummer: 07003069.7
(22) Anmeldetag: 13.02.2007
(51) Int. Cl.: H04B 10/00, H04B 10/22

(54) **System zur Übermittlung und/oder Erfassung von Informationen**

(71) Anmelder: SIEMENS AKTIENGESELLSCHAFT, 80333 München (DE)
(72) Erfinder: Bäumer, Michael, 46244 Bottrop-Feldhausen (DE); Frey, Andreas, 55232 Alzey (DE); Hofbauer, Thomas, Dr., 73666 Baltmannsweiler (DE); Huittinen, Soeren, 40231 Düsseldorf (DE); Kempen, Stefan, 44263 Dortmund (DE); Kowalski, Waldemar, 45472 Mülheim an der Ruhr (DE); Olbricht, Daniel, 46485 Wesel (DE)

(57) **Zusammenfassung**

Die Erfindung betrifft ein System (1) zur Übermittlung und/oder Erfassung von Informationen, umfassend einen drehbar gelagerten Rotor (2) und einen dem Rotor (2) gegenüberliegenden Bauteil (3). Die Energieübertragung zum auf dem Rotor angeordneten Aktivteilen erfolgt über eine Lichtenergie-Lichtquelle und auf dem Rotor angeordneten Energie-Empfänger (9). Die Datenüberragung erfolgt über eine Empfangs-Lichtquelle (10), einer Sende-Lichtquelle (14) und einem Empfänger-Lichtempfänger (11) und einem Sende-Lichtempfänger (15).

## Beschreibung

Die Erfindung betrifft ein System zur Übermittlung und/oder Erfassung von Informationen, umfassend einen drehbar gelagerten Rotor und ein dem Rotor gegenüberliegendes Bauteil, wobei an dem Rotor zumindest ein Aktivteil angeordnet ist, wobei das Aktivteil zum Erfassen und/oder Übermitteln von Informationen ausgebildet ist.

In Systemen, die aus einem drehenden Teil und einem gegenüber dem drehenden Teil feststehenden Teil bestehen, stellt die Übertragung von Energie von dem feststehenden Teil zum drehenden Teil eine Herausforderung dar. Ebenso ist die Übertragung von Energie von dem drehenden Teil zum stehenden Teil eine Herausforderung. Die Energieübertragung sollte möglichst fehlerfrei und unempfindlich gegenüber mechanischen Fliehkräften sein. Des Weiteren sollte die Energieübertragung möglichst verlustarm erfolgen.

Neben der Energieübertragung stellt die Datenübertragung bei den vorgenannten Systemen eine Herausforderung dar, wie z. B. bei großen rotierenden Maschinen. Unter einer solchen Maschine ist beispielsweise ein Turbosatz umfassend eine Antriebseinheit wie z. B. eine Dampfturbine und ein Generator zu verstehen. Unter einem System kann ebenso die Dampfturbine für sich und der Generator für sich verstanden werden.

In diesen Systemen werden häufig physikalische Messgrößen zyklisch erfasst und an eine Auswerteeinheit übertragen. Ebenso werden bei solchen Systemen Signale.von einer Auswerte-/Dateneinheit zu Aktoren übertragen. Die Datenübertragung zwischen dem rotierenden Teil und dem stehenden Teil sollte hierbei ohne Datenverlust und ohne Datenverfälschung erfolgen sowie schnell sein.

Es ist bekannt, elektrische Energie zwischen rotierenden und stehenden Teilen mittels Schleifringen zu übertragen. Allerdings verursachen solche Anordnungen eine hohe Reibung und daher einen unerwünschten hohen Verschleiß.

Der Erfindung liegt die Aufgabe zugrunde, ein System zur Übermittlung und/oder Erfassung von Informationen, umfassend einen drehbar gelagerten Rotor und ein dem Rotor gegenüberliegendes Bauteil anzugeben, bei dem ein Aktivteil zuverlässig betrieben werden kann.

Die Aufgabe wird gelöst durch ein gattungsgemäßes System, wobei das Aktivteil zum Erfassen und/oder Übermitteln von Informationen ausgebildet ist, wobei auf dem Rotor ein photosensitiver Energie-Empfänger zum Umwandeln von Lichtenergie in elektrische Energie aufgebracht und an das Aktivteil zur Versorgung mit elektrischer Energie angeschlossen ist, wobei am Bauteil eine Energie-Lichtquelle zum Bestrahlen des photosensitiven Energie-Empfängers angeordnet ist.

Die Erfindung weist unter anderem den Vorteil auf, dass die Energieübertragung von dem stehenden Bauteil zum Rotor nahezu verschleißfrei erfolgt, denn die Energiequelle und der Energieempfänger berühren sich nicht und bilden daher eine berührungslose Energieübertragung. Als Energiequelle wird Lichtenergie berücksichtigt. Die Lichtenergie wird am Bauteil in Form einer Energie-Lichtquelle eingestellt. Als Energie-Lichtquelle sind verschiedene leistungsstarke Lichtquellen denkbar, wie z. B. Ultraviolett- oder Infrarot-Strahlung. Der Energie-Empfänger ist als ein photosensitiver Energie-Empfänger ausgebildet, der beispielsweise als Photovoltaik-Zelle gefertigt ist.

Ein weiterer Vorteil dieser Erfindung ist, dass das System gegenüber mechanischen Fliehkräften unempfindlich ist. Des Weiteren ist ein Vorteil der Erfindung, dass die Energieübertragung unabhängig vom Betriebszustand des Systems erfolgen kann. So ist es z. B. möglich, auch bei einem Stillstand des Rotors Energie zwischen dem Bauteil und dem Rotor zu übertragen.

In einer vorteilhaften Weiterbildung ist eine Empfangs-Lichtquelle vorgesehen, die mit einem Ausgangssignal des Aktivteils gekoppelt ist, wobei ein Empfangs-Lichtempfänger vorgesehen ist, der zum Erfassen des von der Empfangs-Lichtquelle ausgesendeten Empfangs-Signale ausgebildet ist.

Dadurch ist es möglich, vom Aktivteil erfasste Messdaten, die in Form eines Ausgangssignals an die Empfangs-Lichtquelle gesendet wird, einfach und schnell und vor allem wartungsfrei an einen Empfangs-Lichtempfänger zu übertragen. Der Empfangs-Lichtempfänger ist hierbei auf dem Bauteil angeordnet. Des Weiteren erfolgt die vorgeschlagene optische Datenübertragung nahezu fehlerfrei.

In einer weiteren vorteilhaften Weiterbildung ist die Empfangs-Lichtquelle auf dem Rotor angeordnet.
Dadurch ist es möglich, die Datenübertragung sozusagen lokal auf dem Rotor anzuordnen, wodurch das System wartungsfrei gestaltet werden kann.

Vorteilhafterweise wird die Empfangs-Lichtquelle als photoaktive Schicht ausgebildet.

Durch die Ausbildung der Empfangs-Lichtquelle als photoaktive Schicht ist es möglich, eine vergleichsweise geringe Masse auf dem Rotor anzuordnen, wodurch geringe Fliehkräfte entstehen, die als störend empfunden werden.

In einer weiteren vorteilhaften Weiterbildung werden einzelne Leuchtdioden zur Empfangs-Lichtquelle zusammengesetzt.

Durch die Verwendung von Leuchtdioden ist es möglich, eine Lichtquelle zu verwenden, die eine vergleichsweise geringe Menge an Energie benötigt, um einen guten Datenaustausch zu ermöglichen.

In einer weiteren vorteilhaften Weiterbildung ist eine ein Ausgangssignal erzeugende Sende-Lichtquelle vorgesehen, wobei ein Sende-Lichtempfänger vorgesehen ist, die zum Erfassen des von der Sende-Lichtquelle ausgesendeten Sende-Signalen ausgebildet ist, wobei der Sende-Lichtempfänger mit einem Eingang des Aktivteils gekoppelt ist.

Das Aktivteil kann zum einen als Sensor zum Erfassen von verschiedenen physikalischen Messgrößen, wie z. B. Temperatur oder Dehnung eingesetzt werden. Des Weiteren kann das Aktivteil auch als Aktor verwendet werden, wobei die Aktorausgangsdaten an weitere Einheiten übertragen werden können.

Die Datenübertragung von der Sende-Lichtquelle, die ein Ausgangssignal erzeugt, zum Eingang des Aktivteils erfolgt hierbei über optische Einheiten, was zu einer berührungslosen und daher wartungsfreien Übertragung führt.

Vorteilhafterweise wird hierbei die Sende-Lichtquelle an dem Bauteil angeordnet und als Sende-Lichtquelle eine photoaktive Schicht verwendet.

Ebenso kann als Sende-Lichtquelle einzelne Leuchtdioden verwendet werden, die vergleichsweise eine geringe Menge an Energie zur fehlerfreien Funktionsweise benötigen.

In weitern vorteilhaften Weiterbildungen ist der photosensitive Energie-Empfänger, der Empfangs-Lichtempfänger und/oder Sende-Lichtempfänger als Photovoltaikzelle ausgebildet.

Die Erfindung wird anhand von Ausführungsbeispielen näher erläutert, die in den Zeichnungen dargestellt sind.

Es zeigen:
- Figur 1: eine Querschnittsansicht einer Maschine mit einem drehbaren Rotor,
- Figur 2: eine perspektivische Darstellung des Rotors.

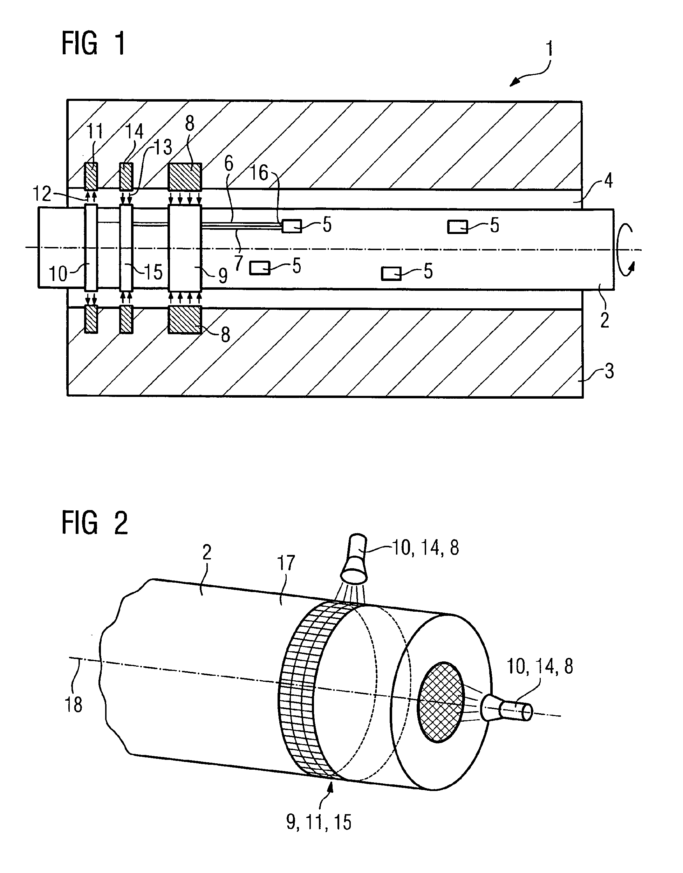

In der Figur 1 ist eine Schnittdarstellung durch ein System 1 dargestellt. Das System 1 ist zur Übermittlung und/oder Erfassung von Informationen ausgebildet und umfasst einen drehbar gelagerten Rotor 2 und ein dem Rotor gegenüberliegendes Bauteil 3. Zwischen dem Rotor 2 und dem Bauteil 3 befindet sich ein Spalt 4, der beispielsweise als Luftspalt ausgebildet sein kann.

Das System 1 kann beispielsweise eine Maschine, wie z. B. eine Dampfturbine oder ein elektrischer Generator sein.

Der Rotor 2 ist drehbar gelagert und rotiert mit einer Frequenz von beispielsweise 50 Hz oder 60 Hz. Da der Rotor 2 für verschiedene Betriebszustände ausgelegt ist, werden sozusagen online Messwerte erfasst. Die Messwerte werden beispielsweise von physikalischen Größen, wie z. B. Temperatur und Dehnung gebildet. Dazu sind verschiedene Aktivteile 5 auf dem Rotor 2 angeordnet. Diese Aktivteile 5 können als Sensoren oder als Aktoren ausgebildet sein.

Die Aktivteile 5 müssen mit elektrischer Energie versorgt werden, was mittels optischer Energieübertragung erfolgt. Der Übersichtlichkeit wegen ist lediglich ein Sensor mit Stromversorgungsleitungen 6 und Datenleitungen 7 in Figur 1 dargestellt. Die optische Energieübertragung findet zwischen einer am Bauteil 3 angeordneten Energie-Lichtquelle 8 und einem am Rotor 2 angeordneten photosensitiven Energie-Empfänger 9 statt. Die Energie-Lichtquelle 8 sendet Lichtenergie bzw. Photoenergie in Richtung des Energie-Empfängers 9 aus. Der Energie-Empfänger 9 ist zum Umwandeln von Lichtenergie in elektrische Energie ausgebildet und an das Aktivteil 5 zur Versorgung mit elektrischer Energie angeschlossen. Die Energie-Lichtquelle 8 kann hierbei als photoaktive Schicht ausgebildet sein. Bekannt sind hierbei fluoreszierende oder phosphoreszierende Schichten. Des Weiteren kann die Energie-Lichtquelle 8 aus einzelnen Leuchtdioden zusammengesetzt sein.

Das Aktivteil 5 ist zum Erfassen und/oder Übermitteln von Informationen ausgebildet. Das System 1 weist des Weiteren eine Empfangs-Lichtquelle 10 auf, die mit einem Ausgangssignal des Aktivteils 5 gekoppelt ist. Die Empfangs-Lichtquelle ist auf dem Rotor 2 angeordnet und ist derart ausgebildet, dass die vom Aktivteil 5 ausgesendeten Ausgangssignale zu einer am Bauteil 3 angeordneten Empfangs-Lichtempfänger 11 gesendet wird. Der Empfangs-Lichtempfänger 11 ist zum Erfassen der von der Empfangs-Lichtquelle 10 ausgesendeten Empfangssignale 12 ausgebildet.

Das System 1 weist für die Übertragung von Daten zum Aktivteil 5 eine ein Ausgangssignal 13 erzeugende Sende-Lichtquelle 14 auf. Die Sende-Lichtquelle 14 ist derart ausgebildet, dass die Ausgangssignale 13 auf einen am Rotor 2 angeordneten Sende-Lichtempfänger 15 auftreffen. Der Sende-Lichtempfänger 15 ist zum Erfassen der von der Sende-Lichtquelle 14 ausgesendeten Ausgangssignale 13 ausgebildet, wobei der Sende-Lichtempfänger 15 mit einem Eingang 16 des Aktivteils 5 gekoppelt ist.

Die Sende-Lichtquelle 14 ist hierbei als photoaktive Schicht ausgebildet. Photoaktive Schichten sind beispielsweise fluoreszierende bzw. phosphoreszierende Schichten. Die Sende-Lichtquelle 14 kann aus einzelnen Leuchtdioden zusammengesetzt sein.

Des Weiteren kann der photosensitive Energie-Empfänger 9, der Empfangs-Lichtempfänger 11 und/oder Sende-Lichtempfänger 15 als Photovoltaikzelle ausgebildet sein.

In der Figur 2 ist eine perspektivische Darstellung des Rotors (2) zu sehen. Beispielhaft ist eine photosensitive Schicht auf der Rotoroberfläche 17 aufgebracht. Die photoaktive Schicht, die als Energie-Empfänger 9, Empfänger-Lichtempfänger 11 oder Sende-Lichtempfänger (15) ausgebildet sein kann, wird von einer Lichtquelle 10, 14, 8 angestrahlt. Die Lichtquelle 8, 10, 14 ist hierbei in der Nähe der Rotoroberfläche 17 angeordnet. In einer alternativen Ausführungsform kann die Lichtquelle 10, 14, 8 in einer axialen Richtung 18 angeordnet werden.

### Bezugszeichenliste

- 1: System
- 2: Rotor
- 3: Bauteil
- 4: Spalt
- 5: Aktivteil
- 6: Stromversorgungsleitung
- 7: Datenleitung
- 8: Energie-Lichtquelle
- 9: Energie-Empfänger
- 10: Empfangs-Lichtquelle
- 11: Empfangs-Lichtempfänger
- 12: Empfangs-Signale
- 13: Ausgangssignale
- 14: Sende-Lichtquelle
- 15: Sende-Lichtempfänger
- 16: Eingang
- 17: Rotoroberfläche
- 18: axiale Richtung

## Patentansprüche

1. System (1)
zur Übermittlung und/oder Erfassung von Informationen, umfassend einen drehbar gelagerten Rotor (2) und einen dem Rotor (2) gegenüberliegenden Bauteil (3),
wobei an dem Rotor (2) zumindest ein Aktivteil (5) angeordnet ist,
wobei das Aktivteil (5) zum Erfassen und/oder Übermitteln von Informationen ausgebildet ist,
**dadurch gekennzeichnet, dass**
auf dem Rotor ein photosensitiver Energie-Empfänger (9) zum Umwandeln von Lichtenergie in elektrische Energie aufgebracht und an das Aktivteil (5) zur Versorgung mit elektrischer Energie angeschlossen ist,
wobei am Bauteil (3) eine Energie-Lichtquelle (8) zum Bestrahlen des photosensitiven Energie-Empfängers (9) angeordnet ist.

2. System (1) nach Anspruch 1,
wobei eine Empfangs-Lichtquelle (10) vorgesehen ist, die mit einem Ausgangssignal des Aktivteils (5) gekoppelt ist, wobei ein Empfangs-Lichtempfänger (11) vorgesehen ist, der zum Erfassen des von der Empfangs-Lichtquelle (10) ausgesendeten Empfangs-Signale (12) ausgebildet ist.

3. System nach Anspruch 2,
wobei die Empfangs-Lichtquelle (10) auf dem Rotor (2) angeordnet ist.

4. System (1) nach Anspruch 2 oder 3,
wobei die Empfangs-Lichtquelle (10) als photoaktive Schicht ausgebildet ist.

5. System (1) nach Anspruch 2 oder 3,
bei dem die Empfangs-Lichtquelle (10) aus einzelnen Leuchtdioden zusammengesetzt ist.

6. System (1) nach einem der vorhergehenden Ansprüche,
wobei eine ein Ausgangssignal (13) erzeugende Sende-Lichtquelle (14) vorgesehen ist,
wobei ein Sende-Lichtempfänger (15) vorgesehen ist, der zum Erfassen des von der Sende-Lichtquelle (14) ausgesendetem Ausgangssignal (13) ausgebildet ist,
wobei der Sende-Lichtempfänger (15) mit einem Eingang (16) des Aktivteils (5) gekoppelt ist.

7. System (1) nach Anspruch 6,
wobei die Sende-Lichtquelle (14) an dem Bauteil (3) angeordnet ist.

8. System (1) nach Anspruch 6 oder 7,
wobei die Sende-Lichtquelle (14) als photoaktive Schicht ausgebildet ist.

9. System (1) nach Anspruch 6 oder 7,
bei dem die Sende-Lichtquelle (14) aus einzelnen Leuchtdioden zusammengesetzt ist.

10. System (1) nach einem der vorhergehenden Ansprüche,
wobei das Aktivteil (5) als Sensor zum Erfassen von physikalischen Größen ausgebildet ist.

11. System (1) nach einem der Ansprüche 1 bis 9,
wobei das Aktivteil (5) als Aktor zum ausgeben von physikalischen Größen oder Signalen ausgebildet ist.

12. System (1) nach einem der vorhergehenden Ansprüche,
wobei der photosensitive Energie-Empfänger (9), der Empfangs-Lichtempfänger (11) und/oder Sende-Lichtempfänger (15) als Photovoltaikzelle ausgebildet ist.
